# DEMANDE DE BREVET EUROPEEN

(11) **EP 1 933 049 A1**
(43) Date de publication de la demande: **18.06.2008**
(21) Numéro de dépôt: 07301649.5
(22) Date de dépôt: 10.12.2007
(51) Int. Cl.: F16D 1/08, F16D 15/00, F16D 21/04

(54) **Boîte de vitesses à crabotage silencieux**

(30) Priorité: 15.12.2006 FR 0655568
(71) Demandeur: PEUGEOT CITROËN AUTOMOBILES SA, 78140 Vélizy Villacoublay (FR)
(72) Inventeur: Lelasseux, Xavier, 92150, SURESNES (FR)

(57) **Abrégé**

L'invention concerne une boîte de vitesses à crabotage silencieux.

Cette boîte de vitesses comprend un arbre (1) portant un pignon fou (2), une navette (3) portée par cet arbre (1) et liée en mouvement au pignon fou (2) pour être animée de mouvements alternatifs par rapport à l'arbre (1) lorsque le pignon fou (2) tourne par rapport à l'arbre (2). Des moyens de blocage (4,17) de cette navette par rapport à l'arbre (2) sont prévus, afin de solidariser le pignon fou (2) en rotation avec l'arbre (1) .

L'invention s'applique notamment aux boîtes de vitesses robotisées.

## Description

L'invention concerne une boîte de vitesses comprenant un arbre secondaire portant un pignon fou secondaire engrené avec un pignon primaire porté par un arbre primaire.

Dans les boîtes de vitesses connues, l'engagement d'un rapport consiste à solidariser en rotation le pignon fou correspondant à ce rapport avec l'arbre secondaire qui le porte. Ceci est effectué en rapprochant un organe d'accouplement du pignon fou à solidariser à l'arbre secondaire.

L'invention peut aussi s'appliquer à une architecture de boîte de vitesses sur laquelle le pignon fou n'est plus sur l'arbre secondaire mais sur l'arbre primaire. De ce fait, il sera nécessaire de solidariser l'arbre primaire avec le pignon fou.

Chaque organe d'accouplement est associé à un pignon fou, et il comprend un synchroniseur et un crabot. Lorsque l'organe d'accouplement est rapproché du pignon fou, le synchroniseur met d'abord le pignon fou à la même vitesse de rotation que le pignon fou, par friction.

Après égalisation des vitesses de rotation, le crabot comprend une denture de crabotage qui vient s'emboîter dans une denture latérale correspondante du pignon fou pour le solidariser en rotation avec l'arbre.

Ces boîtes de vitesses connues sont silencieuses car le crabotage se fait seulement lorsque les vitesses du pignon fou et de l'arbre sont identiques, mais en contre partie, elles nécessitent un temps de changement de rapport relativement important, souvent supérieur à 100ms.

Ce temps de changement de rapport important s'avère être problématique pour les boîtes de vitesses pilotées par des actionneurs, c'est à dire dans lesquelles les différents organes, mis en jeu pour le changement de rapport, sont pilotés automatiquement depuis une unité de commande.

Il est connu des boîtes de vitesses pour véhicules de compétition, qui sont dépourvues de synchroniseurs, la solidarisation en mouvement d'un pignon fou avec l'arbre étant alors réalisée directement par l'emboîtement du crabot, sans synchronisation préalable.

Cette solution permet de réduire le temps de changement de rapport du fait que la phase de synchronisation est supprimée, mais elle présente l'inconvénient de générer des chocs lors des crabotages, provoquant des bruits importants lors des changements de rapports, ce qui n'est pas admissible pour des véhicules de série.

A cet effet, l'invention propose une nouvelle architecture de boîte de vitesses, dans laquelle les changements de rapport sont rapides sans générer de choc de crabotage.

A cet effet, l'invention a pour objet une boîte de vitesses comprenant un arbre portant un pignon fou, caractérisée en ce qu'elle comprend une navette portée par cet arbre et liée en mouvement au pignon fou pour être animée de mouvements alternatifs par rapport à l'arbre lorsque le pignon fou tourne par rapport à l'arbre, et des moyens de blocage de cette navette par rapport à l'arbre pour solidariser le pignon fou en rotation avec l'arbre.

L'invention concerne également une boîte de vitesses telle que définie ci-dessus, dans laquelle le pignon fou comprend un moyeu pourvu d'une surface externe cylindrique excentrée par rapport à l'arbre, formant excentrique, dans laquelle la navette comprend une cavité engagée sur l'excentrique, et dans laquelle la navette est solidaire en rotation de l'arbre tout en étant mobile en translation radialement par rapport à l'arbre.

L'invention concerne également une boîte de vitesses telle que définie ci-dessus, comprenant une clavette traversant radialement la navette et l'arbre en étant rigidement solidaire de l'arbre, la navette étant apte à coulisser le long de la clavette.

L'invention concerne également une boîte de vitesses telle que définie ci-dessus, comprenant un coulisseau solidaire en rotation de l'arbre, ce coulisseau portant un doigt et étant déplaçable le long de l'arbre pour engager le doigt entre l'arbre et une face interne de la navette pour la bloquer radialement.

L'invention concerne également une boîte de vitesses telle que définie ci-dessus, dans laquelle le pignon fou comprend un moyeu pourvu d'une surface externe cylindrique portant une gorge courbe, dans laquelle la navette est solidaire en rotation de l'arbre tout en étant mobile en translation le long de l'arbre, et dans laquelle cette navette est pourvue d'un plot engagé dans la gorge.

L'invention concerne également une boîte de vitesses telle que définie ci-dessus, comprenant une clavette traversant radialement la navette et l'arbre en étant rigidement solidaire de l'arbre, la navette étant pourvue de deux lumières oblongues s'étendant chacune parallèlement à l'arbre, chaque lumière oblongue étant traversée par la clavette pour autoriser un mouvement longitudinal de la navette.

L'invention concerne également une boîte de vitesses telle que définie ci-dessus, dans laquelle les moyens de blocage de la navette comprennent un doigt mobile radialement par rapport à l'arbre pour être engagé dans l'une des lumières le long de la clavette.

L'invention concerne également une boîte de vitesses telle que définie ci-dessus, dans laquelle le pignon fou comprend un moyeu pourvu d'une face latérale inclinée par rapport à l'arbre, et dans laquelle la navette est liée à l'arbre par une liaison rotule tout en étant solidaire en rotation avec l'arbre, et dans laquelle cette navette présente une face plane en appui sur la face latérale inclinée du moyeu.

L'invention concerne également une boîte de vitesses telle que définie ci-dessus, dans laquelle les moyens de blocage comprennent un doigt mobile radialement par rapport à l'arbre et apte à être engagé entre la navette et une face d'appui fixe par rapport à l'arbre.

L'invention sera maintenant décrite plus en détail, et en référence aux figures annexées.
La figure 1 est une vue schématique en coupe longitudinale d'un arbre portant un pignon fou et une navette selon un premier mode de réalisation de l'invention ;
La figure 2 est une vue schématique selon un premier plan de coupe transversal de la navette du premier mode de réalisation de l'invention ;
La figure 3 est une vue schématique selon un second plan de coupe transversal de la navette du premier mode de réalisation de l'invention ;
La figure 4 est un graphe montrant l'évolution de la position par rapport à l'arbre de la navette du premier ou du second mode de réalisation de l'invention lorsque le pignon fou tourne par rapport à l'arbre ;
La figure 5 est un graphe montrant l'évolution de la vitesse par rapport à l'arbre de la navette du premier ou du second mode de réalisation de l'invention lorsque le pignon fou tourne par rapport à l'arbre ;
La figure 6 est une vue schématique en coupe longitudinale d'un arbre portant un pignon fou et une navette selon un second mode de réalisation de l'invention ;
La figure 7 est une vue schématique en coupe longitudinale d'un arbre portant un pignon fou et une navette selon un troisième mode de réalisation de l'invention.

L'idée à la base de l'invention est de prévoir une navette, portée par l'arbre secondaire et liée en mouvement avec le pignon fou pour avoir un mouvement alternatif par rapport à l'arbre lorsque le pignon fou tourne par rapport à l'arbre.

La liaison entre le pignon et la navette assure un mouvement alternatif cyclique, par exemple de type sinusoïdal, de sorte que la vitesse de la navette par rapport à l'arbre passe par des valeurs nulles pendant que le pignon tourne autour de l'arbre.

De cette manière, lorsque la vitesse est faible, la navette peut être bloquée par rapport à l'arbre, ce qui permet d'égaliser quasi instantanément les vitesses du pignon et de l'arbre. Avantageusement, le blocage de la navette est effectué lorsque la vitesse de la navette par rapport à l'arbre est nulle, de sorte qu'il est complètement silencieux.

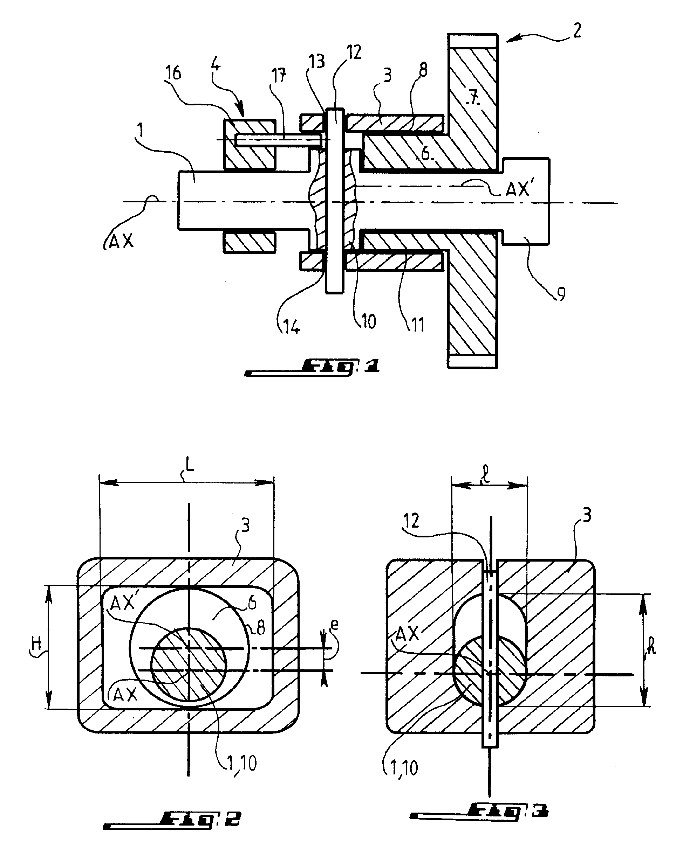

Dans la figure 1, on a représenté un arbre secondaire 1 s'étendant selon un axe AX et portant un pignon fou 2, ainsi qu'une navette repérée par 3 et un coulisseau 4. Le pignon fou 2 qui est un pignon secondaire comprend un moyeu 6 portant une roue dentée 7 engagée dans un pignon primaire non représenté.

Ce moyeu 6 qui est rigidement la roue dentée 7 autour de l'axe AX comprend une portion dépassant de cette roue dentée, et formant une surface externe cylindrique 8, ou excentrique, d'axe AX' parallèle à l'axe AX, ces deux axes étant espacés l'un de l'autre d'une distance e, appelée excentration ou entraxe.

Le moyeu 6 qui est mobile en rotation par rapport à l'arbre, est immobilisé en translation par rapport à ce dernier en étant monté entre deux épaulements de l'arbre 1, repérés par 9 et 10.

La navette 3 est représentée schématiquement sous forme d'une pièce creuse ayant une section transversale présentant un contour externe généralement rectangulaire, visible aux figures 2 et 3.

Au niveau de sa première extrémité, cette navette a une section intérieure creuse de forme rectangulaire apte à s'emboîter sur le contour cylindrique 8. Cette section rectangulaire creuse a une hauteur H légèrement supérieure au diamètre de l'excentrique 8 pour garantir un jeu de fonctionnement. Et elle a une longueur L égale au diamètre de l'excentrique 8 plus deux fois l'entraxe e plus un peu de jeu de fonctionnement.

Cette navette 3 a sa première extrémité engagée sur l'excentrique 8, et elle est solidarisée à l'arbre 1 au niveau de sa seconde extrémité, par une clavette radiale 12, grâce à laquelle elle est solidaire en rotation de l'arbre 1 tout en étant mobile radialement par rapport à celui-ci le long de la clavette 12.

La seconde extrémité de la navette présente une section creuse définissant un contour interne de forme oblongue, visible figure 3. Ce contour interne a une hauteur h correspondant au diamètre de l'arbre 1 au niveau de l'épaulement 10 plus deux fois l'excentration e, et une largeur 1 correspondant au diamètre de l'arbre secondaire 1 au niveau de l'épaulement 10.

La clavette 12 traverse radialement la navette 3 et l'arbre 1 en étant rigidement solidaire de l'arbre. Cette navette 3 comprend deux trous 13 et 14 situés au niveau de sa seconde extrémité, et diamétralement opposés par rapport à l'axe AX. Chaque trou 13, 14 traverse l'un des côtés du rectangle ayant pour longueur L, et chaque trou 13, 14 est traversé par une extrémité de la clavette 12.

Les trous 13 et 14 ont des diamètres légèrement supérieurs au diamètre de la clavette 12 pour permettre à la navette 3 de se déplacer en translation le long de cette clavette 12.

Le coulisseau 4 comprend un corps 16 engagé sur l'arbre 1, et qui est solidaire en rotation de l'arbre 1 tout en étant mobile en translation le long de celui-ci. Ce corps 16 porte un doigt de blocage 17 s'étendant parallèlement à l'axe AX et dépassant du corps 16 en direction de la navette 3.

Ainsi, en se déplaçant le long de l'axe AX, de droite à gauche sur la figure 1, on trouve successivement le premier épaulement 9, la roue dentée 7, la partie du moyeu 6 dépassant de la roue dentée 7 et définissant la came 8, cette surface étant entourée par la première extrémité de la navette 3, puis la seconde extrémité de la navette 3, traversée par la clavette 12, et le coulisseau 4.

Dans la situation de la figure 1, le coulisseau 4 bloque la navette 3 par rapport à l'arbre 1 en étant rapproché au maximum de cette navette 3 le long de l'arbre, de sorte que le doigt de blocage 17 est interposé entre la surface interne 11 de la navette 3 et l'épaulement 10, ce qui interdit à la navette de se déplacer le long de la clavette 12.

La hauteur du doigt 17, mesurée radialement par rapport à l'axe AX, correspond à la différence entre la hauteur H et le diamètre de l'arbre 1 au niveau de l'épaulement 10.

Lorsque le coulisseau est écarté de la navette 3, le doigt 17 est dégagé, ce qui permet à la navette 3 de se déplacer le long de la clavette 12.

En fonctionnement, lorsque le coulisseau 4 est écarté de la navette 3, le pignon fou 2 tourne par rapport à l'arbre 1, de sorte que l'excentrique 8 tourne par rapport à l'arbre 1, dans la cavité de la première extrémité de la navette 3.

Ce mouvement rotatif de l'excentrique 8 se traduit par un mouvement alternatif de translation de la navette par rapport à l'arbre, le long d'un axe radial coïncidant avec celui de la clavette 12.

Le blocage du pignon fou 2 sur l'arbre 1, consiste alors simplement à rapprocher le coulisseau 4 de la navette pour introduire le doigt 17 dans l'espace situé entre la surface interne 11 de cette cavité et l'arbre 1 au niveau de son épaulement 10.

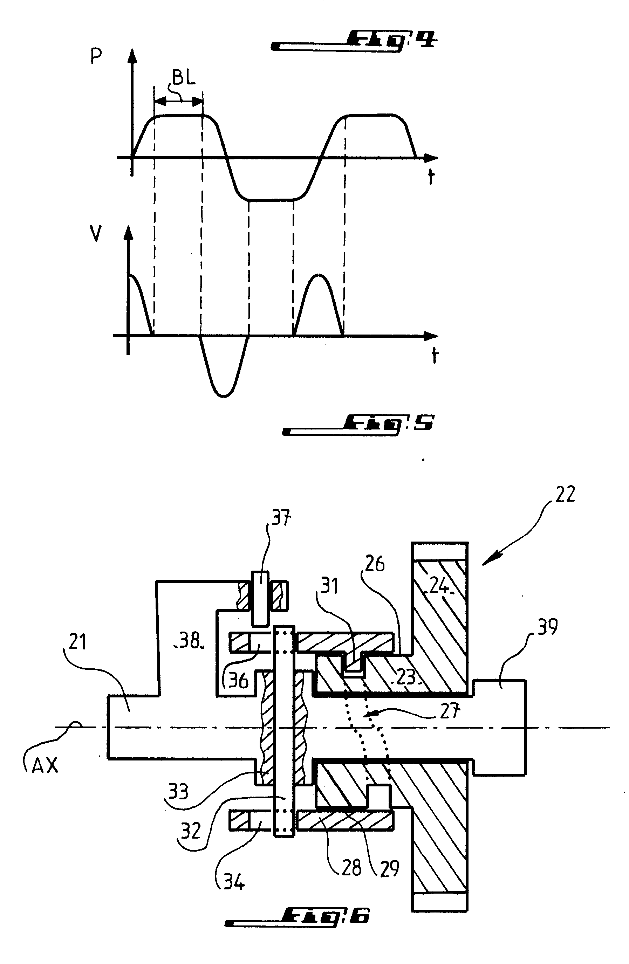

Comme visible sur la figure 4, compte tenu de l'inertie de la navette 3 et des formes de la came 8 et de la cavité de la première extrémité de la navette 3, l'évolution de la position P de la navette 3 le long de la clavette 12 passe par des phases durant lesquelles cette navette est immobile alors que le pignon 2 tourne par rapport à l'arbre.

En correspondance avec le graphe de la figure 4, la figure 5 donne l'évolution de la vitesse de la navette 3 le long de la clavette 12 lorsque le pignon 2 tourne autour de l'arbre 1, avec une vitesse de rotation constante.

L'une des phases d'immobilité de la clavette, repérée par BL, correspond à la situation de la figure 3, dans laquelle la face interne 11 de la navette est suffisamment éloignée de la face externe de l'arbre 1, au niveau de l'épaulement 10, pour permettre l'introduction du doigt de blocage 17 afin de solidariser le pignon 2 en rotation avec l'arbre 1.

Avantageusement, le coulisseau 4 est commandé pour être rapproché de la navette durant la phase BL, ce qui facilite le blocage du pignon, ce blocage s'effectuant alors de manière silencieuse.

Selon un second mode de réalisation de l'invention, représenté en figure 6, la navette est animée de mouvements alternatifs de translation le long de l'arbre lorsque le pignon tourne par rapport à cet arbre.

Dans ce second mode de réalisation, l'arbre secondaire, repéré par 21 a la même forme générale que l'arbre 1 du premier mode de réalisation. Le pignon 22 comprend la aussi un moyeu 23 portant une roue dentée 24.

Le moyeu comprend une portion qui dépasse de la roue dentée, et qui délimite une surface externe cylindrique 26 portant une gorge 27, ou rampe, de forme courbe. Cette gorge 27 a par exemple une forme générale de correspondant à une période complète de sinusoïde projetée sur la surface cylindrique 26.

La navette qui est repérée par 28 a une forme générale tubulaire, présentant une surface interne cylindrique 29 dont le diamètre correspond au diamètre de la surface cylindrique 26. Cette navette qui est portée par l'arbre 21 qu'elle entoure, a sa première extrémité engagée sur la surface cylindrique 26.

La navette est pourvue d'un plot de guidage 31 dépassant radialement de sa surface interne 29, au niveau de sa première extrémité, et engagé dans la gorge 27.

La navette 28 est solidarisée à l'arbre 21 par une clavette 32, de telle manière que cette navette est solidaire en rotation de l'arbre tout en étant mobile en translation le long de celui-ci.

Plus particulièrement, la clavette 32 traverse radialement la navette 28 et l'arbre 21 au niveau d'un épaulement 33 de ce dernier, et elle est rigidement solidaire de l'arbre. La navette 28 comprend à sa seconde extrémité deux lumières oblongues 34 et 36, diamétralement opposées par rapport à l'axe AX.

Chaque lumière 34, 36, qui traverse la paroi tubulaire de la navette 28 est orientée parallèlement à l'axe AX, et est traversée par une extrémité de la clavette 32. Ceci permet à la navette 28 de coulisser le long de l'arbre sur une course légèrement inférieure à la longueur de ces lumières oblongues tout en étant solidaire en rotation de cet arbre.

Le blocage de la navette 28 est assuré par un doigt de blocage 37 porté par un support 38 rigidement solidaire de l'arbre 21, ce doigt étant orienté selon une direction radiale par rapport à l'axe AX tout en étant mobile en translation selon cette direction radiale.

Ce doigt est positionné parallèlement à la clavette 32, de manière à pouvoir être engagé dans la lumière 36, le long de la clavette 32 lorsque la navette 28 occupe sa position la plus éloignée du pignon 22. Comme on l'aura compris, le doigt a un diamètre correspondant sensiblement à celui de la clavette 32 et au diamètre de la lumière 36, cette lumière ayant une longueur correspondant au double de ce diamètre.

En parcourant l'arbre 21, de droite à gauche sur la figure 6, on rencontre un premier épaulement 39 de cet arbre, puis la roue dentée 24, puis la portion cylindrique 26 du moyeu 23 qui est entourée par la première extrémité de la navette 28, puis la seconde extrémité de cette navette qui entoure le second épaulement de l'arbre 21, et le doigt de blocage 37 porté par le support 38.

En fonctionnement, lorsque le doigt de blocage 37 est dégagé de la lumière 36, le pignon fou 22 tourne par rapport à l'arbre 21. Compte tenu de la gorge ondulée 27 et du plot 31 engagé dans cette gorge, la navette est alors animée d'un mouvement alternatif de translation le long de l'arbre 21.

Avantageusement, la gorge courbe 27 comprend une portion droite dans une région correspondant à une position dans laquelle la navette est la plus éloignée possible du pignon 22. Ainsi, il est également possible de définir une plage d'immobilité telle que la plage BL de la figure 4, ce qui autorise un engagement du doigt 37 sans effort, c'est-à-dire un blocage du pignon 22 de manière silencieuse.

Dans ce cas, le blocage du pignon 22 consiste à agir sur un actionneur non représenté pour déplacer le doigt 37 radialement vers l'arbre 21 afin d'engager ce doigt dans une extrémité de la lumière 36, lorsque le plot 31 est dans la région rectiligne de la gorge 27. La navette 28 est immobilisée en translation le long de l'arbre, ce qui a pour effet de bloquer le pignon 22 en rotation par rapport à l'arbre 21.

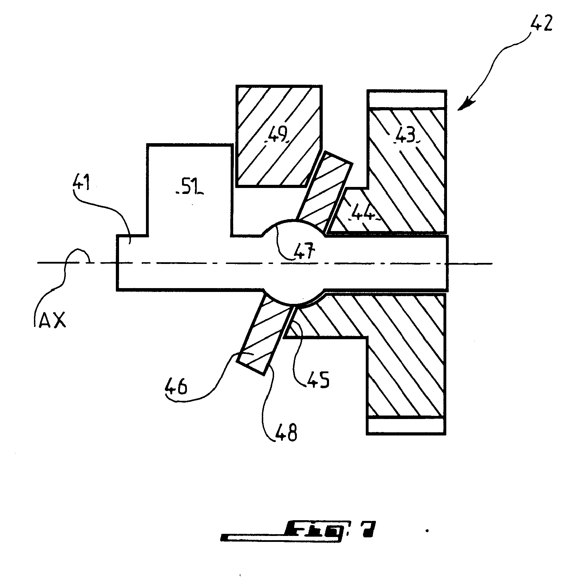

Dans un troisième mode de réalisation représenté en figure 7, la navette se présente sous forme d'un disque qui est animé de mouvements de rotulation oscillatoires lorsque le pignon tourne par rapport à l'arbre.

Dans ce troisième mode de réalisation, l'arbre secondaire 41 porte un pignon 42 incluant une roue dentée 43 qui entoure un moyeu 44 de ce pignon. Le moyeu dépasse de la roue dentée 43, et il présente une face latérale 45 orientée de façon oblique par rapport à l'axe AX.

La navette 46 a une forme générale de disque, elle est solidarisée en rotation avec l'arbre qu'elle entoure, par une liaison non représentée, en étant d'autre part liée à cet arbre 41 par une liaison rotule repérée par 47 dans la figure. Ce disque est accolé au moyeu de sorte que l'une de ses faces planes 48 est continûment en appui sur la face 45 du moyeu 43.

Lorsque le pignon tourne par rapport à l'arbre 41, la navette est animée d'un mouvement de rotulation par rapport à l'arbre 41. Selon ce mouvement, le plan dans lequel se lit le plus grand angle séparant l'axe AX et la surface 48 tourne autour de l'axe AX, la navette 46 restant par ailleurs solidaire en rotation de l'arbre.

Le blocage de la navette 46 par rapport à l'arbre 41 est assuré par un doigt 49 porté par un support 51 rigidement solidaire de l'arbre 41, ce doigt étant mobile radialement par rapport à l'axe AX. Le blocage consiste à agir sur un actionneur non représenté pour rapprocher le doigt 49 de l'arbre 41, pour qu'il s'engage entre le support 51 et la navette 46, comme c'est le cas dans la figure 7.

Il est à noter que dans les différents modes de réalisation de l'invention, lors du blocage du pignon, l'énergie issue de l'inertie est quasi instantanément transformée, ce qui implique de dimensionner le système pour qu'il résiste à des efforts importants. On peut également prévoir l'ajout de raideurs de type ressort pour réduire l'intensité de ces efforts.

Dans le cas du premier mode de réalisation, on peut aussi prévoir une surcourse du doigt de blocage qui, après avoir bloqué la navette, vient solidariser le pignon fou avec l'arbre comme c'est le cas avec les crabots classiques.

L'invention réduit significativement le prix des boîtes de vitesses manuelles et améliore les performances des boîtes de vitesses pilotées, en comparaison avec les autres architectures, comme les boîtes de vitesses automatiques, les boîtes de vitesses à variation continue, ou les boîtes de vitesses à double embrayage.

## Revendications

1. Boîte de vitesses comprenant un arbre (1 ; 21) portant un pignon fou (2 ; 22), **caractérisée en ce qu'**elle comprend une navette (3 ; 28) portée par cet arbre (1 ; 21) et liée en mouvement au pignon fou (2 ; 22) pour être animée de mouvements alternatifs par rapport à l'arbre (1 ; 21) lorsque le pignon fou (2 ; 22) tourne par rapport à l'arbre (1 ; 21), et des moyens de blocage (4, 17 ; 38, 37) de cette navette (3 ; 28) par rapport à l'arbre (1 ; 21) pour solidariser le pignon fou (2 ; 22) en rotation avec l'arbre (1 ; 21).

2. Boîte de vitesses selon la revendication 1, dans laquelle le pignon fou (2) comprend un moyeu (6) pourvu d'une surface externe cylindrique excentrée par rapport à l'arbre (1, 2), formant excentrique (8), dans laquelle la navette (3) comprend une cavité engagée sur l'excentrique (8), et dans laquelle la navette (3) est solidaire en rotation de l'arbre (1) tout en étant mobile en translation radialement par rapport à l'arbre (1).

3. Boîte de vitesses selon la revendication 3, comprenant une clavette (12) traversant radialement la navette (3) et l'arbre (1) en étant rigidement solidaire de l'arbre (1), la navette (3) étant apte à coulisser le long de la clavette (12).

4. Boîte de vitesses selon la revendication 2 ou 3, comprenant un coulisseau (4) solidaire en rotation de l'arbre, ce coulisseau portant un doigt (17) et étant déplaçable le long de l'arbre (1) pour engager le doigt (17) entre l'arbre (1) et une face interne (11) de la navette (3) pour la bloquer radialement.

5. Boîte de vitesses selon la revendication 1, dans laquelle le pignon fou (22) comprend un moyeu (23) pourvu d'une surface externe cylindrique (26) portant une gorge courbe (27), dans laquelle la navette (28) est solidaire en rotation de l'arbre (21) tout en étant mobile en translation le long de l'arbre, et dans laquelle cette navette (28) est pourvue d'un plot (31) engagé dans la gorge (27).

6. Boîte de vitesses selon la revendication 5, comprenant une clavette (32) traversant radialement la navette (28) et l'arbre (21) en étant rigidement solidaire de l'arbre (21), la navette (28) étant pourvue de deux lumières oblongues (34, 36) s'étendant chacune parallèlement à l'arbre (21), chaque lumière oblongue (34, 36) étant traversée par la clavette (32) pour autoriser un mouvement longitudinal de la navette (28).

7. Boîte de vitesses selon la revendication 6, dans laquelle les moyens de blocage de la navette (28) comprennent un doigt (37) mobile radialement par rapport à l'arbre (21) pour être engagé dans l'une des lumières (36) le long de la clavette (32).

8. Boîte de vitesses selon la revendication 1, dans laquelle le pignon fou (42) comprend un moyeu (44) pourvu d'une face latérale inclinée (45) par rapport à l'arbre (41), et dans laquelle la navette (46) est liée à l'arbre (41) par une liaison rotule (47) tout en étant solidaire en rotation avec l'arbre (41), et dans laquelle cette navette (46) présente une face plane en appui sur la face latérale inclinée (45) du moyeu (44).

9. Boîte de vitesses selon la revendication 8, dans laquelle les moyens de blocage comprennent un doigt mobile (49) radialement par rapport à l'arbre (41) et apte à être engagé entre la navette (46) et une face d'appui fixe par rapport à l'arbre (41).
